# EUROPEAN PATENT APPLICATION

(11) **EP 4 844 953 A1**
(43) Date of publication of application: **25.11.2026**
(21) Application number: 26178981.2
(22) Date of filing: 15.05.2026
(51) Int. Cl.: H01R 9/05, G02B 6/38, H01P 5/02, H01R 4/18, H01R 13/623

(54) **PLUG AND WAVEGUIDE CONNECTION STRUCTURE**

(30) Priority: 22.05.2025 JP 2025085364
(71) Applicant: Hosiden Corporation, Yao-shi, Osaka 581-0071 (JP)
(72) Inventor: TAMAKI, Fumitake, Yao-shi, 5810071 (JP)
(74) Representative: LBP Lemcke, Brommer & Partner Patentanwälte mbB

(57) **Abstract**

In a connection structure of a plug (1) and a waveguide (3), the waveguide (3) has an internal dielectric (5) and a tubular external conductor (7) including a contact section (7a) and a non-contact section (7b), and the plug (1) has a plug member (10) in which a through hole (20) into which the internal dielectric (5) is insertable is formed and a tubular crimping member (50) that at least partially surrounds the plug member (10). The plug member (10) has a tubular connecting section (18) on the side on which the internal dielectric (5) is inserted. The non-contact section (7b) of the external conductor (7) at least partially covers an outer periphery of the connecting section (18), with the internal dielectric (5) inserted into the through hole (20) of the plug member (10). The crimping member (50) is fitted onto the connecting section (18) of the plug member (10) and the non-contact section (7b) of the external conductor (7). The waveguide (3) is connected to the plug (1), by crimping the crimping member (50) and bringing the crimping member (50) into close contact with the non-contact section (7b) and the connecting section (18).

## Description

### TECHNICAL FIELD

The present disclosure relates to a plug and waveguide connection structure.

### RELATED ART

JP 2017-147548A describes a connection structure of a flexible plug (connector in JP 2017-147548A) and a waveguide. In this plug and waveguide connection structure, the plug and an antenna attached to the waveguide are connected, by connecting the plug to the waveguide.

The waveguide has a cylindrical shape as a whole. The waveguide is constituted by a first tubular dielectric having a cylindrical shape, a tubular conductor formed on an outer peripheral surface of the first tubular dielectric and composed of a mesh conductor, and a second tubular dielectric formed on the outer peripheral surface of the tubular conductor and having a cylindrical shape. The plug has a claw that engages the outer peripheral surface of the second tubular dielectric of the waveguide. The plug is thereby able to connect and fix the waveguide.

### SUMMARY

However, with the plug and waveguide connection structure described in JP 2017-147548A, if the second tubular dielectric and the tubular conductor are thin, the portion that is engaged by the claw could possibly be pulled and broken, and, in a worst case scenario, the connection between the plug and the waveguide could possibly be disconnected. Thus, there is room for improvement in plug and waveguide connection structures.

In view of this, a plug and waveguide connection structure that is not easily disconnected is desired.

A technology for solving the above problem is as follows. One embodiment of a plug and waveguide connection structure according to the present disclosure is a plug and waveguide connection structure including a plug and a waveguide that connects to the plug, the waveguide having a rod-shaped internal dielectric and a tubular external conductor including a contact section contacting an outer periphery of the internal dielectric and a non-contact section not contacting the outer periphery of the internal dielectric, the plug having a plug member in which a through hole into which the internal dielectric is insertable is formed, and a tubular crimping member at least partially surrounding the plug member, the plug member having a tubular connecting section on a side on which the internal dielectric is inserted, the non-contact section of the external conductor at least partially covering an outer periphery of the connecting section, with the internal dielectric inserted into the through hole of the plug member, the crimping member being fitted onto the connecting section of the plug member and the non-contact section of the external conductor, and the waveguide being connected to the plug, by crimping the crimping member and bringing the crimping member into close contact with the non-contact section and the connecting section.

According to the present embodiment, the tensile strength of the connecting portion of the plug and the waveguide can be increased. Also, the plug and the waveguide can be connected without using a separate member to fix the plug member and the crimping member, and thus the plug and waveguide connection structure can be easily realized with an inexpensive construction method. Also, if the waveguide is flexible, the tensile strength can be increased so as to withstand even a tensile force occurring in an inclined portion of the connecting portion when the waveguide is flexed. In this way, a plug and waveguide connection structure that is not easily disconnected can be realized.

In another embodiment of the plug and waveguide connection structure according to the present disclosure, the plug and waveguide connection structure further includes a tube that shrinks with heat, and the tube, when shrunk, is disposed in close contact from the crimping member of the plug to the contact section of the external conductor.

According to the present embodiment, the connecting section of the plug member and the contact section of the external conductor of the waveguide can be fixed with the tube at the same time that the tube and the crimping member are fixed, and thus the connection strength between the plug and the waveguide is increased, and, even if the waveguide is pulled, the waveguide can be prevented from being damaged and from detaching from the plug. Also, the tube shrinks with heat and thus can be brought into close contact without the internal dielectric of the waveguide separating from the external conductor in the connecting section of the plug member, enabling propagation loss that occurs in portions where the internal dielectric and the external conductor have separated to be prevented. Furthermore, if a hot-melt adhesive is disposed on an inner layer of the tube, the holding force of the tube to the connecting section, the waveguide, and the crimping member increases due to the adhesive, and the tensile strength of the waveguide with respect to the plug can be increased.

In another embodiment of the plug and waveguide connection structure according to the present disclosure, the internal dielectric has a distal end portion located inside the through hole of the plug member and tapered such that an area of a cross-section perpendicular to an extension direction of the through hole decreases proceeding toward a distal end thereof.

According to the present embodiment, the output direction of radio waves transmitted from the internal dielectric to the receptacle to which the plug is connected can be narrowed, due to the distal end portion being tapered, and thus reflection loss in the boundary portion with the receptacle can be reduced. Also, the distal end portion of the internal dielectric being tapered facilitates inserting the distal end portion of the internal dielectric into the through hole of the plug member in order to connect the waveguide to the plug member, and thus the internal dielectric can be inserted into the through hole even if the cross-sectional shape and cross-sectional area of the internal dielectric in a direction perpendicular to an extension direction thereof is substantially the same as the cross-sectional shape and cross-sectional area of the through hole in a direction perpendicular to the extension direction thereof. The gap between the internal dielectric and the through hole within the plug member is thereby eliminated, thus enabling propagation loss of radio waves caused by the gap to be reduced.

In another embodiment of the plug and waveguide connection structure according to the present disclosure, the connecting section of the plug member has a recessed portion formed in an outer peripheral surface thereof, and a portion of the non-contact section of the external conductor opposing the connecting section is deformed according to a shape of the outer peripheral surface including the recessed portion due to the crimping member being crimped.

According to the present embodiment, due to the external conductor biting into the recessed portion in the outer peripheral surface of the connecting section together with the crimping member, the crimping strength between the crimping member and the connecting section can be increased, and the tensile strength of the external conductor with respect to the plug can also be increased at the same time. Also, shifting or detachment of the crimping member with respect to the connecting section of the plug member due to vibrations or impacts can be suppressed.

In another embodiment of the plug and waveguide connection structure according to the present disclosure, the crimping member is made of a metal, and a base of the metal is exposed on a surface of the crimping member or the surface of the crimping member is covered with a metal having a greater ionization tendency than platinum.

According to the present embodiment, the surface of the crimping member of the plug is either untreated, leaving the base of the metal exposed, or surface-treated by being covered with a metal (e.g., tin) having a greater ionization tendency than platinum. Adhesion between the crimping member and the inner surface of the tube can thereby be increased due to an oxide film that is formed on the surface of the crimping member. Also, if a hot-melt adhesive is disposed on an inner layer of the tube, the holding force of the tube to the connecting section of the plug member increases and the tensile strength of the waveguide with respect to the plug can be further increased, due to the adhesive force of the adhesive to the oxide film or the surface of the crimping member.

For example, if the plug member has been surface-treated by gold plating, the holding force or adhesive strength due to close contact between the tube and the connecting section may not achieve an expected value. Even in such a case, the holding force or adhesive strength due to close contact between the tube and the crimping member, which is firmly fixed to the connecting section by crimping, is large, and thus the tensile strength of the waveguide with respect to the plug can be increased, by the holding force or adhesive force due to close contact of the tube with the waveguide and the plug.

In another embodiment of the plug and waveguide connection structure according to the present disclosure, the plug further includes a plug cover that at least partially covers an outer periphery of the plug member and is fitted onto the plug member in such a manner as to be rotatable relative to the plug member, and the plug cover has a holding section configured to irremovably hold a fitting partner to be fitted to the plug by rotation.

According to the present embodiment, the plug to which the waveguide is connected can be connected and locked to a connection partner (fitting partner) such as another waveguide, a receptacle, or a communication apparatus. Also, because the plug is connected to the connection partner with a bayonet structure, the connection between the plug and the connection partner will not loosen or be released by vibrations or impacts. Furthermore, when connecting the plug to or removing the plug from the connection partner, the plug cover must be held and rotated manually, and thus damaging the waveguide or the connecting portion of the plug and the waveguide due to application of external force can be prevented by physically holding the waveguide when removing the plug from the connection partner.

### BRIEF DESCRIPTION OF DRAWINGS

FIG. 1 is a perspective view showing a plug connected to a waveguide.
FIG. 2 is an exploded perspective view of the plug and the waveguide.
FIG. 3 is an exploded perspective view of the plug and the waveguide.
FIG. 4 is a cross-sectional view taken along line IV-IV of FIG. 1.

### DESCRIPTION OF EMBODIMENTS

Hereinafter, embodiments of a plug and waveguide connection structure according to the present disclosure will be described in detail, with reference to the drawings. Note that the embodiments described below are examples for illustrating the plug and waveguide connection structure according to the present disclosure, and the plug and waveguide connection structure is not limited to these embodiments. Accordingly, the plug and waveguide connection structure of the present disclosure can be implemented in various modes without departing from the spirit of the disclosure.

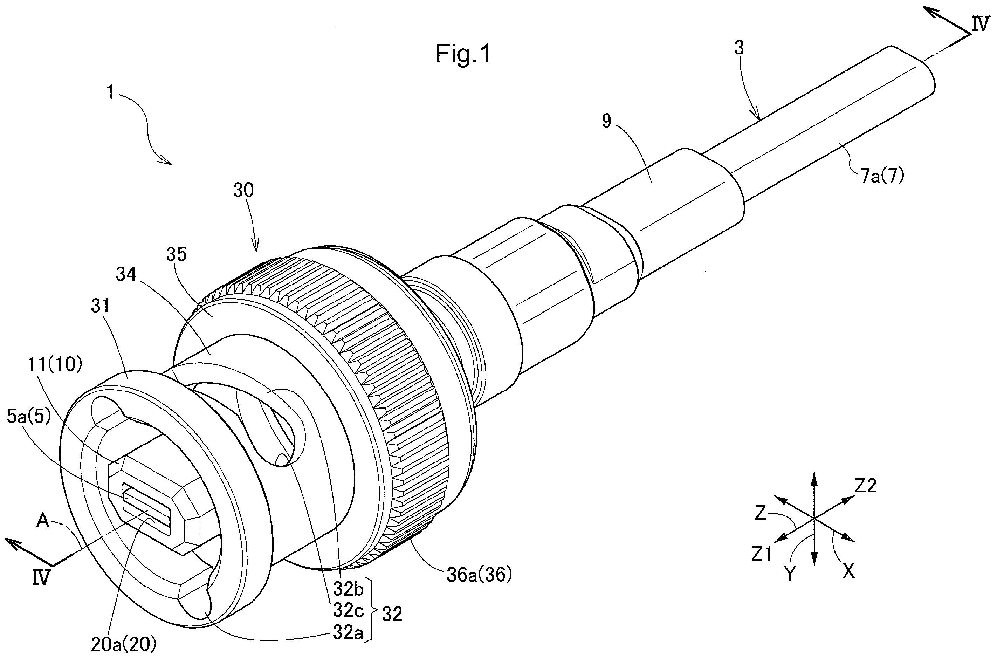

As shown in FIG. 1, the connection structure according to the present embodiment includes a plug 1 and a waveguide 3 that connects to the plug 1. The plug 1 can be connected to a receptacle (not shown) that is fitted to the plug 1.

### Configuration of Plug

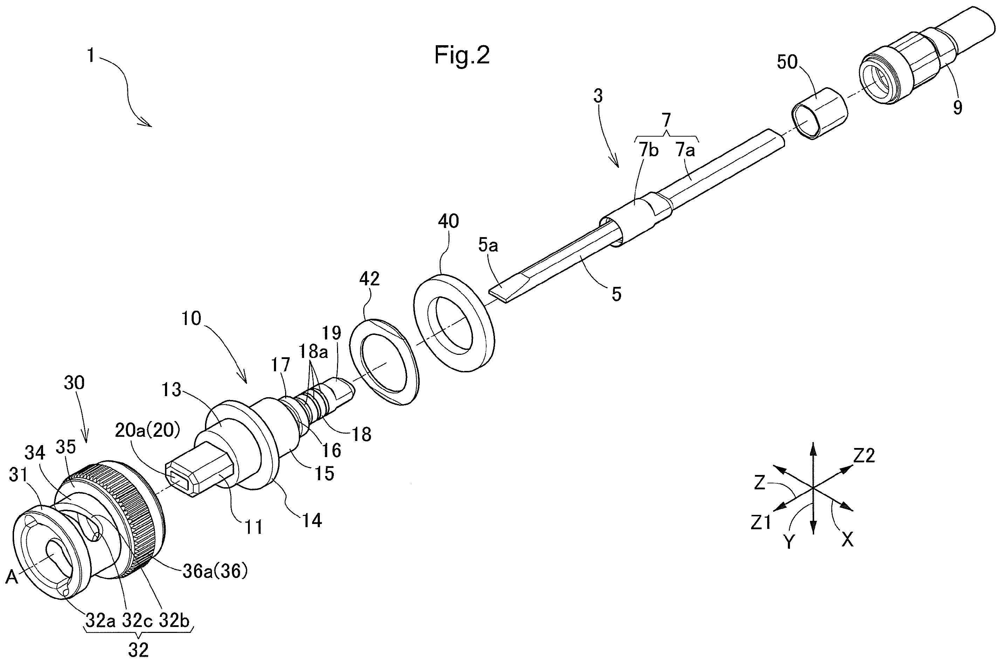

The configuration of the plug 1 according to the present embodiment will be described with reference to FIGS. 1 to 4. As shown in FIGS. 2 to 4, the plug 1 includes a plug body 10 (example of plug member), a plug cover 30, a rear cover 40, a wave washer 42, and a crimping member 50.

### Structure of Plug Body

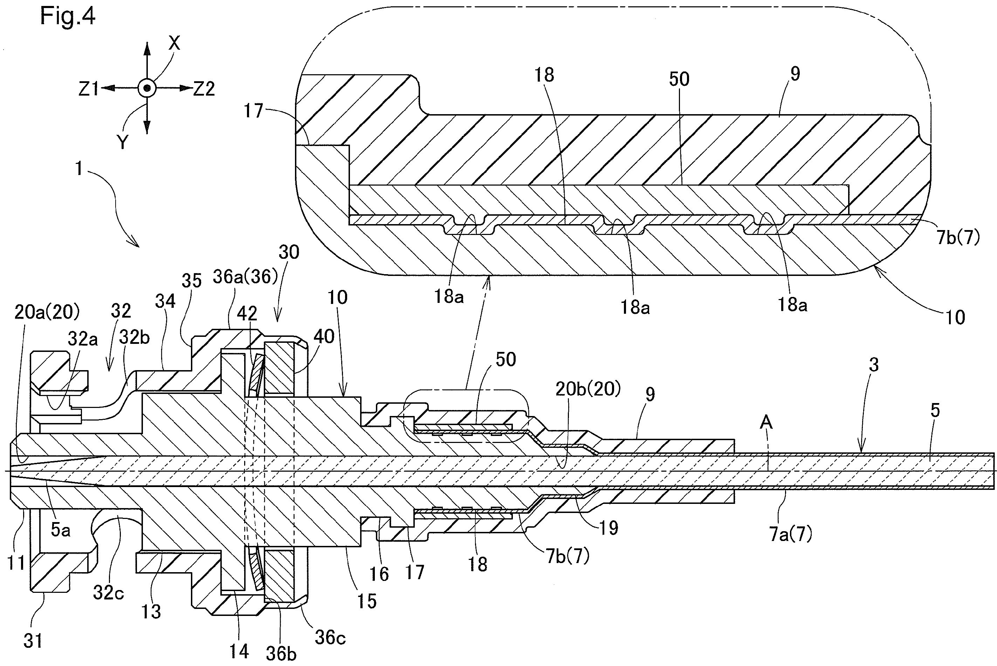

The plug body 10 of the plug 1 is made of a conductive metal. The plug body 10 has a first fitting section 11, a first large diameter section 13, a first flange section 14, a second large diameter section 15, a small diameter section 16, a second flange section 17, a connecting section 18, and a guide section 19 that are integrally formed and disposed in the stated order. The plug body 10 has a through hole 20 extending from the first fitting section 11 to the guide section 19 formed therein, and the plug body 10 is thereby tubular (see FIG. 4). The central axis of the through hole 20 will be referred to as an axis A. The respective central axes from the first fitting section 11 to the guide section 19 coincide with the axis A.

Hereinafter, the direction parallel to the axis A will be referred to as a "Z direction", the disposition direction and side of the first fitting section 11 with respect to the guide section 19 of the plug body 10 in parallel with the Z direction will be referred to as a "Z1 direction" and a "Z1 side", and the opposite direction and side will be referred to as a "Z2 direction" and a "Z2 side". The Z direction is a general term for the Z1 and Z2 directions.

The through hole 20 in the plug body 10 has a rectangular shape in a cross-section perpendicular to the axis A at the Z1-side end portion of the length of the first fitting section 11 in the Z direction, and the cross-sectional shape gradually changes proceeding in the Z2 direction therefrom into an oblong shape having a pair of semicircles respectively inscribed in the pair of short sides of the rectangular shape. The oblong shape is then maintained therefrom to the Z2-side end portion of the guide section 19. Gradually changing the cross-sectional shape of the through hole 20 from rectangular to oblong suppresses loss caused by radio waves output from a distal end portion 5a being reflected at the edge. Hereinafter, the portion of the through hole 20 in which the cross-sectional shape gradually changes from rectangular to oblong will be referred to as a first through portion 20a, and the oblong portion will be referred to as a second through portion 20b. The waveguide 3 has an internal dielectric 5 that is inserted into the through hole 20 of the plug body 10. The structure of the waveguide 3 will be detailed later. In other words, the Z1-side end face of the first through portion 20a has a cross-sectional shape perpendicular to the axis A that is matched to the cross-sectional shape of a waveguide to be connected thereto, and the second through portion 20b is matched to the cross-sectional shape of the internal dielectric 5.

Hereinafter, the direction parallel to the long sides of the rectangular shape of the Z1-side end portion of the first through portion 20a perpendicular to the axis A will be referred to as an "X direction", and the direction parallel to the short sides will be referred to as a "Y direction" (see FIG. 1).

The receptacle (example of connection partner) to be fitted to the plug 1 is fitted onto the first fitting section 11 of the plug body 10. The first fitting section 11 has an octagonal outer shape constituted by four pairs of parallel sides in a cross-section perpendicular to the axis A (see FIGS. 1 and 2). That is, the first fitting section 11 has an octagonal tubular shape extending along the axis A. Two pairs of parallel sides of the octagonal shape are respectively parallel to the X direction and the Y direction. The two sides parallel to the X direction are longer than the two sides parallel to the Y direction. The perimeter of the Z1-side end portion of the first fitting section 11 is C-chamfered. The C-chamfer may, however, be omitted from the cross-sectional shape of the first fitting section 11 perpendicular to the axis A, or an R-chamfer may be applied instead of a C-chamfer. The cross-sectional shape of the first fitting section 11 perpendicular to the axis A may be any shape that allows the receptacle to be fitted thereon.

The first large diameter section 13 of the plug body 10 is joined to the Z2-side end portion of the first fitting section 11. The first large diameter section 13 has a circular outer shape in a cross-section perpendicular to the axis A. The first large diameter section 13 has a larger outer diameter than the length of the longest diagonal of the octagonal shape of the first fitting section 11 in a cross-section perpendicular to the axis A. That is, when viewed in the Z2 direction, the entire outer edge of the first large diameter section 13 is located radially outward of the entire outer edge of the first fitting section 11. The first large diameter section 13 is shorter in the Z direction than the first fitting section 11.

The first flange section 14 of the plug body 10 is joined to the Z2-side end portion of the first large diameter section 13. The first flange section 14 has a circular outer shape in a cross-section perpendicular to the axis A. The first flange section 14 has a larger outer diameter than the first large diameter section 13. The first flange section 14 is shorter in the Z direction than the first large diameter section 13.

The second large diameter section 15 of the plug body 10 is joined to the Z2-side end portion of the first flange section 14. The second large diameter section 15 has a circular outer shape in a cross-section perpendicular to the axis A. The second large diameter section 15 has a slightly smaller outer diameter than the first large diameter section 13. The second large diameter section 15 is longer in the Z direction than the first large diameter section 13.

The small diameter section 16 of the plug body 10 is joined to the Z2-side end portion of the second large diameter section 15. The small diameter section 16 has a circular outer shape in a cross-section perpendicular to the axis A. The outer diameter of the small diameter section 16 is smaller than the outer diameter of the second large diameter section 15, shorter than the distance between the two sides of the first fitting section 11 parallel to the Y direction, and longer than the distance between the two sides of the first fitting section 11 parallel to the X direction. The small diameter section 16 is slightly longer in the Z direction than the first flange section 14.

The second flange section 17 of the plug body 10 is joined to the Z2-side end portion of the small diameter section 16. The second flange section 17 has a circular outer shape in a cross-section perpendicular to the axis A. The second flange section 17 has an outer diameter larger than the small diameter section 16 and smaller than the second large diameter section 15. The second flange section 17 is comparable in length to the first flange section 14 in the Z direction.

The connecting section 18 of the plug body 10 is joined to the Z2-side end portion of the second flange section 17. The connecting section 18 has a circular outer shape in a cross-section perpendicular to the axis A. The connecting section 18 has an outer diameter smaller than the small diameter section 16 and comparable to the distance between the two sides of the first fitting section 11 parallel to the X direction. The connecting section 18 is comparable in length to the first fitting section 11 in the Z direction. The connecting section 18 has formed therein a plurality (three in the present embodiment) of grooves 18a (example of recessed portion) extending around the entire outer peripheral surface in a direction perpendicular to the axis A. The connecting section 18 is undulated in the Z direction due to the grooves 18a, when viewed in a direction perpendicular to the Z direction.

The guide section 19 of the plug body 10 is joined to the Z2-side end portion of the connecting section 18. The guide section 19 has an oblong outer shape in a cross-section perpendicular to the axis A that is similar to the oblong cross-sectional shape of the second through portion 20b of the through hole 20. The distance between the pair of semicircles on the outer edge of the guide section 19 (distance in X direction) is equal to the outer diameter of the connecting section 18, and the length in the Y direction is less than the outer diameter of the connecting section 18. The guide section 19 is slightly shorter in the Z direction than the first large diameter section 13. The perimeter of the Z2-side end portion of the guide section 19 is C-chamfered.

### Plug Cover and Attachment Structure Thereof

Next, the plug cover 30 of the plug 1 will be described. As shown in FIG. 4, the plug cover 30 is fitted over the second large diameter section 15 from the first fitting section 11 of the plug body 10, and is rotatable about the axis A relative to the plug body 10. The plug cover 30 has a well-known so-called bayonet structure. With the plug cover 30 mounted to the plug body 10, the distal end of the first fitting section 11 of the plug body 10 protrudes on the Z1 side from the plug cover 30.

The plug cover 30 is made of a conductive metal. The plug cover 30 has a second fitting section 31, a positioning section 34, a step section 35, and an operating section 36 that are integrally formed and disposed in the stated order in the Z2 direction.

The second fitting section 31 of the plug cover 30 is fitted onto the first fitting section 11 of the plug body 10 with a gap thereto in the radial direction (see FIGS. 1 and 4). The receptacle to be fitted to the plug 1 is fitted into this gap. That is, the receptacle is disposed radially between the first fitting section 11 and the second fitting section 31.

The second fitting section 31 has a holding section 32 that holds the receptacle. The holding section 32 is formed as a pair at point-symmetrical positions of the second fitting section 31 to the axis A. As shown in FIG. 1, the pair of holding sections 32 each have a locking groove 32a, a locking hole 32b, and a latching section 32c. The pair of locking grooves 32a are formed at point-symmetrical positions to the axis A in the Z direction from the Z1-side end portion of the second fitting section 31. The pair of locking holes 32b are respectively formed in a circumferential direction continuously from the Z2-side end portions of the pair of locking grooves 32a. The pair of latching sections 32c are formed on the Z2 side with respect to the locking grooves 32a at the ends of the pair of locking holes 32b.

When fitting the receptacle to the plug 1, a pair of locking pins (not shown) disposed at point-symmetrical positions on the outer peripheral surface of the receptacle are inserted into the locking grooves 32a of the holding section 32. Once the pair of locking pins have reached the ends of the locking grooves 32a, the plug cover 30 is rotated relative to the plug body 10 while griping a knurled portion 36a of the operating section 36 of the plug cover 30. The pair of locking holes 32b thereby rotate while being guided by the pair of locking pins. The plug cover 30 rotates until the pair of locking pins are latched in the pair of latching sections 32c. The pair of latching sections 32c are each slightly depressed in the Z1 direction, and the receptacle is irremovably held with respect to the plug 1 due to the locking pins catching in these depressions. Fitting together of the plug 1 and the receptacle is thereby completed. The structure including the pairs of locking grooves 32a, locking holes 32b, and latching sections 32c in the second fitting section 31 is a bayonet structure.

The positioning section 34 of the plug cover 30 is joined to the Z2-side end portion of the second fitting section 31. The positioning section 34 is cylindrical and fits onto the first large diameter section 13 of the plug body 10 with a slight gap thereto (see FIG. 4). The plug cover 30 is radially positioned relative to the plug body 10, due to the positioning section 34 being fitted onto the first large diameter section 13.

The step section 35 of the plug cover 30 is joined to the positioning section 34 on the Z2 side. The step section 35 extends radially outward with respect to the positioning section 34. The Z2-side surface of the step section 35 is in contact with the Z1-side surface of the first flange section 14.

The operating section 36 of the plug cover 30 is joined to the step section 35 on the Z2 side. The operating section 36 is cylindrical and is fitted onto the first flange section 14 of the plug body 10 with a gap thereto. The operating section 36 has a larger outer diameter than the positioning section 34. The knurled portion 36a is formed on the outer peripheral surface of the operating section 36 and facilitates rotating the plug cover 30 relative to the plug body 10 (see FIG. 1).

As shown in FIG. 4, the wave washer 42 and the rear cover 40 are inserted into the radially inward internal space of the operating section 36 on the Z2 side with respect to the first flange section 14. The rear cover 40 is made of a high-strength material such as a metal and has an annular disk shape. The portion of the wave washer 42 furthest on the Z1 side comes in contact with the Z2-side surface of the first flange section 14 of the plug body 10, and the portion of the wave washer 42 furthest on the Z2 side comes in contact with the Z1-side surface of the rear cover 40. At this time, the wave washer 42 is elastically deformable in the Z direction.

On the inner peripheral surface of the operating section 36 is formed a stopper 36b that restricts movement of the rear cover 40 in the Z1 direction. The operating section 36 has an edge portion 36c on the Z2 side that is deformed radially inward, such that the inner diameter thereof is smaller than the outer diameter of the rear cover 40, with the Z1-side surface of the rear cover 40 in contact with the stopper 36b. The rear cover 40 and the wave washer 42 are thereby prevented from dropping out of the internal space of the operating section 36.

The wave washer 42 elastically deforms in the internal space of the operating section 36 and applies a biasing force to the Z2-side surface of the first flange section 14 and the Z1-side surface of the rear cover 40. As shown in FIG. 4, the plug cover 30 is thereby in contact with the plug body 10 due to the Z2-side surface of the step section 35 being pressed against the Z1-side surface of the first flange section 14.

### Configuration of Waveguide

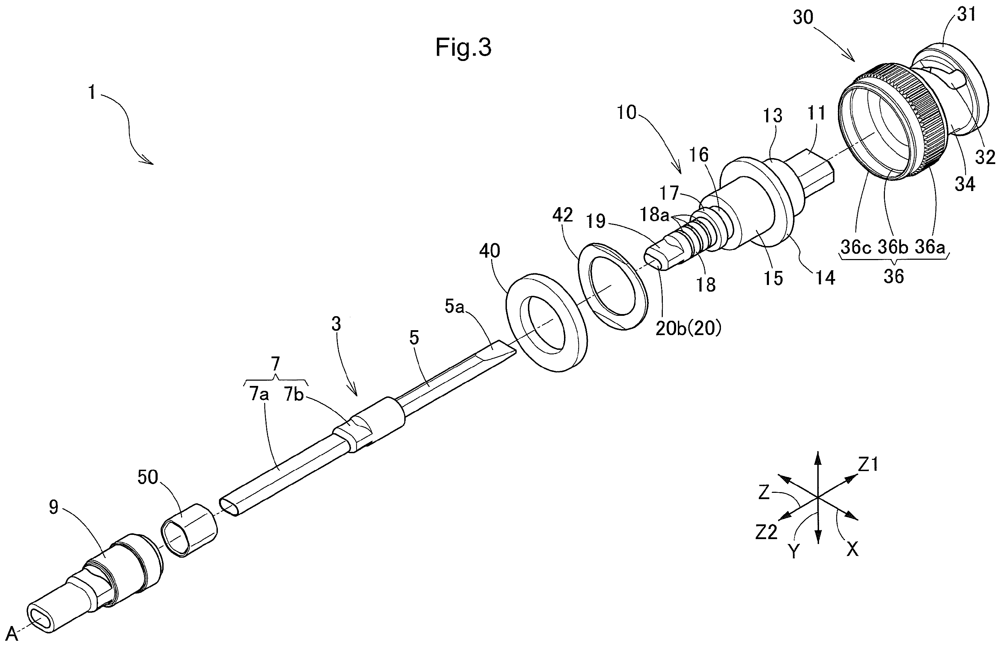

As shown in FIGS. 2 and 3, the waveguide 3 includes an internal dielectric 5 made of an insulator such as a resin and an external conductor 7 that is in close contact with the outer periphery of the internal dielectric 5, with the waveguide 3 being rod-shaped as a whole and flexible. The waveguide 3 is used to propagate microwaves and millimeter waves through the internal dielectric 5 with low loss. The internal dielectric 5 of the waveguide 3 is inserted into the through hole 20 of the plug body 10 of the plug 1 (see FIG. 4). The internal dielectric 5 has an oblong shape in a cross-section perpendicular to the axis A and is insertable into the second through portion 20b of the through hole 20 with no gap therebetween. The Z1-side end face of the internal dielectric 5 is flush with the Z1-side end face of the first fitting section 11 of the plug body 10 (see FIG. 4). The Z1-side end face of the internal dielectric 5 may, however, protrude from the Z1-side end face of the first fitting section 11 of the plug body 10, or may be slightly further inward (Z2 side) with respect to the Z1-side end face of the first fitting section 11.

The distal end portion 5a of the internal dielectric 5 on the Z1 side is tapered such that the distance between the two sides parallel to the X direction decreases proceeding in the Z1 direction. These two sides parallel to the X direction remain separated at the distal end on the Z1-side. In the present embodiment, the distal end portion 5a is located entirely in the first through portion 20a of the through hole 20 of the plug body 10, but a portion of the distal end portion 5a may be located in the first through portion 20a and the remaining portion may be located in the second through portion 20b. Note that the first fitting section 11 of the plug body 10 and the distal end portion 5a of the internal dielectric 5 form the base of the plug 1 that is inserted into the receptacle.

The internal dielectric 5 of the waveguide 3 can be made of any material and have any cross-sectional shape that supports the frequencies of microwaves and millimeter waves that propagate therethrough. If the frequency band that propagates the waveguide 3 is 30 GHz to 300 GHz, the material and cross-sectional shape of the internal dielectric 5 preferably support this frequency band. Furthermore, the material and cross-sectional shape of the internal dielectric 5 more preferably support the 60 GHz band (60.0 to 61.0 GHz), the 76 GHz band (76.0 to 77.0 GHz), and the 79 GHz band (77.0 to 81.0 GHz).

The internal dielectric 5 is made of a fluorine-based material with a low dielectric constant. Specifically, the internal dielectric 5 is made of PTFE (polytetrafluoroethylene) with a dielectric constant of around 2.0 or a resin material whose main component is PTFE. The internal dielectric 5 can be made of any material that results in low attenuation of microwaves and millimeter waves propagating therethrough.

The cross-sectional shape of the internal dielectric 5 perpendicular to the axis A is not limited to an oblong shape and may also be substantially rectangular. For example, the cross-sectional shape of the internal dielectric 5 perpendicular to the axis A may be substantially the same as the inner diameter dimension of a waveguide compliant with rectangular waveguide standards standardized by EIAJ, IEC, and the like. Specifically, a size of 3.099 mm × 1.549 mm stipulated by WRI-740 based on the EIAJ standard (WR-12 based on the EIA standard). In these cases, the cross-sectional shape of the second through portion 20b of the through hole 20 perpendicular to the axis A is preferably the same as the cross-sectional shape of the internal dielectric 5.

The external conductor 7 of the waveguide 3 has a braided structure formed using a metal foil and a resin film and is conductive. As shown in FIG. 4, the external conductor 7 is not inserted into the through hole 20 of the plug body 10. The external conductor 7 has a contact section 7a that is in close contact with the internal dielectric 5 on the Z2 side with respect to the plug body 10 and a non-contact section 7b that is not inserted into the through hole 20 and is not in close contact with the internal dielectric 5. The non-contact section 7b of the external conductor 7 fits over the connecting section 18 from the guide section 19 of the plug body 10.

Because the waveguide 3 is flexible, an assembly in which the plug 1 is connected to the waveguide 3 can be used to extend the input/output end of another waveguide 3, a communication apparatus, or the like in any direction. Also, another plug 1 can be indirectly connected to an electronic device or a device such as an antenna or directly connected to a communication device or a device such as an antenna, by being connected to the opposite side of the above assembly to the waveguide 3. Furthermore, when the waveguide 3 is flexible, the tensile strength can be increased to withstand even a tensile force occurring in an inclined portion of the connecting portion when the waveguide 3 is flexed.

### Crimping Member

The crimping member 50 of the plug 1 is made of a metal such as iron, and has a hexagonal tubular shape after being crimped. The crimping member 50 is further fitted onto the portion of the non-contact section 7b of the external conductor 7 of the waveguide 3 onto which the connecting section 18 is fitted. The crimping member 50 has an inner diameter slightly larger than the outer diameter of the non-contact section 7b of the external conductor 7 and has an outer diameter smaller than the second flange section 17 (see FIG. 4). The crimping member 50 can thereby be positioned in the Z direction by coming in contact with the second flange section 17. The crimping member 50 is slightly shorter in the Z direction than the connecting section 18. Note that the crimping member 50 before being crimped is preferably cylindrical for reasons such as availability and cost.

The crimping member 50 is mounted in contact with the Z2-side surface of the second flange section 17 and crimped in a direction that reduces the diameter thereof by a known method. By crimping the crimping member 50, the plug 1 and the waveguide 3 are undetachably connected to each other. This is the connection structure of the plug 1 and the waveguide 3.

As shown in the partially enlarged view of FIG. 4, by crimping the crimping member 50, the inner peripheral surface of the portion of the non-contact section 7b of the external conductor 7 where the crimping member 50 and the connecting section 18 overlap when viewed in a direction perpendicular to the Z direction deforms according to the undulations of the grooves 18a of the connecting section 18. That is, the inner peripheral surface of the non-contact section 7b opposing the grooves 18a is depressed radially inward according to the shape of the outer peripheral surface of the connecting section 18 including the grooves 18a. Note that deformation of the inner peripheral surface of the non-contact section 7b according to the shape of the outer peripheral surface of the connecting section 18 including the grooves 18a is not limited to the case where the non-contact section 7b deforms to be in close contact with all surfaces partitioning the grooves 18a, as shown in FIG. 4, and also includes the case where the non-contact section 7b at least partially entered the grooves 18a and is not entirely in close contact therewith.

After the crimping member 50 is crimped, a heat shrink tube 9 (example of tube) made of an insulating resin is disposed extending from the small diameter section 16 to the contact section 7a of the waveguide 3 on the Z2 side with respect to the plug body 10. After being shrunk with heat, the heat shrink tube 9 is in close contact with the small diameter section 16, the second flange section 17, the crimping member 50, and the non-contact section 7b and contact section 7a of the external conductor 7 of the waveguide 3. Because the heat shrink tube 9 is in close contact with the small diameter section 16 of the plug body 10 and the second flange section 17 of larger diameter than the small diameter section 16, the heat shrink tube 9 after being shrunk does not move in the Z2 direction relative to the plug body 10. Hot-melt adhesive may be disposed on the inner peripheral surface of the heat shrink tube 9.

### Plug Assembly Method

Next, the assembly method of the plug 1 according to the present embodiment will be described. First, the plug cover 30 is fitted onto the Z1-side end portion of the plug body 10, and the Z2-side surface of the step section 35 of the plug cover 30 is brought into contact with the Z1-side surface of the first flange section 14 of the plug body 10. Next, the wave washer 42 and the rear cover 40 are fitted in the stated order onto the plug body 10 from the Z2 side. In the internal space of the operating section 36 of the plug cover 30, the rear cover 40 is then moved in the Z1 direction such that the wave washer 42 is brought into contact with the Z2-side surface of the first flange section 14 and is slightly elastically deformed in the Z direction (wave washer 42 is not flattened and is further elastically deformable). In this state, the Z2-side edge portion 36c of the operating section 36 of the plug cover 30 is deformed radially inward, and the inner diameter of the edge portion 36c becomes smaller than the outer diameter of the rear cover 40. The wave washer 42 and the rear cover 40 are thereby held inside the plug cover 30 with the wave washer 42 elastically deformed.

In this state, the wave washer 42 applies a biasing force to the Z2-side surface of the first flange section 14 and the Z1-side surface of the rear cover 40, and thus the plug cover 30 is in contact with the plug body 10 due to the Z2-side surface of the step section 35 being pressed against the Z1-side surface of the first flange section 14. In response to a force exceeding the biasing force of the wave washer 42 being applied in the Z1 direction of the plug cover 30, the plug cover 30 can be moved in the Z1 direction relative to the plug body 10 until the wave washer 42 is flattened (until there is no longer any waviness). Also, in this state, the plug cover 30 is rotatable about the axis A relative to the plug body 10. Note that the order in which the plug cover 30 is attached to the plug body 10 and the order in which the wave washer 42 and the rear cover 40 are attached thereto may be reversed.

### Plug and Waveguide Connection Structure

Next, the connection structure of the plug 1 and the waveguide 3 according to the embodiment will be described. First, the waveguide 3 to be connected to the plug 1 is prepared. First, the waveguide 3 is cut to the required length. Next, the external conductor 7 is separated from the internal dielectric 5 such that a predetermined length (e.g., length of plug body 10 in Z direction) of the internal dielectric 5 is exposed from the Z1-side end portion of the waveguide 3 toward the Z2 side. Only the length of the external conductor 7 required as the non-contact section 7b (length for fitting onto connecting section 18 and guide section 19) is kept and the remaining portion of the external conductor 7 is cut off. Finally, the distal end portion 5a of the internal dielectric 5 is tapered by cutting, polishing, and the like. Specifically, the two parallel surfaces of the internal dielectric 5 having an oblong cross-section perpendicular to the extension direction are both cut and polished using a jig or the like to form an inclined surface on both surfaces, such that the distance between the two sides located at the Z1-side ends of the two surfaces decreases proceeding in the Z1 direction. At this time, the two surfaces of the tapered shape preferably have the same inclination angle as each other, but the inclination angles may differ.

Next, the internal dielectric 5 is inserted into the through hole 20 from the Z2 side of the plug body 10 of the plug 1 toward the Z1 side. The internal dielectric 5 is inserted into the through hole 20 until the Z1-side end face of the distal end portion 5a is flush with the Z1-side end face of the first fitting section 11 of the plug body 10 (see FIG. 4). After insertion of the internal dielectric 5 into the through hole 20 is completed, the separated external conductor 7 (non-contact section 7b) of the waveguide 3 is fitted onto the connecting section 18 and the guide section 19 of the plug body 10. Note that, if the waveguide 3 to be connected to the plug 1 is long, it is better to insert the crimping member 50 and the heat shrink tube 9 over the waveguide 3 in advance, before inserting the internal dielectric 5 into the through hole 20. If the waveguide 3 is short, the crimping member 50 and the heat shrink tube 9 may be inserted over the waveguide 3 after inserting the internal dielectric 5 into the through hole 20. In either case, the crimping member 50 and the heat shrink tube 9 may be inserted over the waveguide 3 in any order.

In that state, the cylindrical crimping member 50 is fitted onto the non-contact section 7b so as to come in contact with the Z2-side surface of the second flange section 17 of the plug body 10. At this time, the Z2-side end portion of the connecting section 18 of the plug body 10 is desirably exposed on the Z2 side from the Z2-side end portion of the crimping member 50. The crimping member 50 is then crimped into a hexagonal tubular shape using a dedicated jig or the like. The plug 1 and the waveguide 3 are thereby undetachably connected to each other.

Finally, the heat shrink tube 9 is fitted over the contact section 7a of the waveguide 3 on the Z2 side with respect to the plug body 10 from the small diameter section 16, such that the Z1-side end portion of the heat shrink tube 9 comes in contact with the Z2-side surface of the second large diameter section 15. The heat shrink tube 9 is then heated and shrunk using a dedicated jig such as a heater and brought into intimate contact with the small diameter section 16, the second flange section 17, the crimping member 50, and the non-contact section 7b and contact section 7a of the external conductor 7 of the waveguide 3.

In the present embodiment, the surface of the crimping member 50 of the plug 1 is either untreated, leaving the base of the metal exposed, or surface-treated by being covered with a metal (e.g., tin) having a greater ionization tendency than platinum. Adhesion between the crimping member 50 and the inner surface of the heat shrink tube 9 can thereby be increased due to the oxide film that is formed on the surface of the crimping member 50. Also, if a hot-melt adhesive is disposed on an inner layer of the heat shrink tube 9, the holding force of the heat shrink tube 9 to the connecting section 18 of the plug body 10 increases and the tensile strength of the waveguide 3 with respect to the plug 1 can be further increased, due to the adhesive force of the adhesive to the oxide film or the surface of the crimping member 50.

For example, if the plug body 10 has been surface-treated by gold plating, the holding force or adhesive strength due to close contact between the heat shrink tube 9 and the connecting section 18 may not achieve an expected value. Even in such a case, the holding force or adhesive strength due to close contact between the heat shrink tube 9 and the crimping member 50, which is firmly fixed to the connecting section 18 by crimping, is large, and thus the tensile strength of the waveguide 3 with respect to the plug 1 can be increased, by the holding force or adhesive force due to close contact of the heat shrink tube 9 with the waveguide 3 and the plug 1.

### Other Embodiments

(1) In the above embodiment, the tapered shape of the distal end portion 5a on the Z1 side of the internal dielectric 5 is formed such that the distance between the two surfaces parallel to the X direction decreases proceeding in the Z1 direction, but the present disclosure is not limited thereto. A configuration may be adopted in which the distance between the two surfaces disposed perpendicular to the X direction (in waveguide 3 of the above embodiment, surfaces whose cross-sectional shape perpendicular to the axis A is a pair of semicircles) decreases proceeding in the Z1 direction.
(2) In the above embodiment, the grooves 18a are formed around the entire circumference of the connecting section 18 of the plug body 10, but dimples (example of recessed portion) may be formed instead of the grooves 18a or together with the grooves 18a. Undulations can be formed in any shape that enables the non-contact section 7b of the external conductor 7 of the waveguide 3 to be undetachably adhered to the connecting section 18.
(3) In the above embodiment, the shape of the crimping member 50 after crimping is a hexagonal tubular shape, but the present disclosure is not limited thereto. The crimping member 50 after crimping may be any shape, such as a cylindrical or square tubular shape, that enables the connecting section 18 of the plug body 10 to be adhered to the non-contact section 7b of the external conductor 7 of the waveguide 3.
(4) In the above embodiment, a bayonet structure is formed in the plug cover 30, in order to irremovably hold the receptacle (not shown), but the present disclosure is not limited thereto. The plug 1 can have any holding structure that is able to irremovably hold the receptacle.
(5) In the above embodiment, the wave washer 42 is used in positioning the plug cover 30 relative to the plug body 10 in the Z direction, but the present disclosure is not limited thereto. A coil spring may be used instead of the wave washer 42. A biasing member of any configuration that applies a biasing force to the plug body 10 and the rear cover 40 can be used.
(6) In the above embodiment, three grooves 18a are formed in the connecting section 18 of the plug body 10, but the number of grooves 18a may be two or less or four or more as long as the waveguide 3 can be undetachably connected to the plug 1 by crimping.

### INDUSTRIAL APPLICABILITY

The present disclosure can be utilized in plug and waveguide connection structures.

### REFERENCE SIGNS LIST

1: Plug
3: Waveguide
5: Internal dielectric
5a: Distal end portion
7: External conductor
7a: Contact section
7b: Non-contact section
9: Heat shrink tube (tube)
10: Plug body (plug member)
18: Connecting section
18a: Groove (recessed portion)
20: Through hole
30: Plug cover
32: Holding section
50: Crimping member
A: Axis

## Claims

1. A plug and waveguide connection structure comprising:
a plug (1); and
a waveguide (3) that connects to the plug (1),
the waveguide (3) having a rod-shaped internal dielectric (5) and a tubular external conductor (7) including a contact section (7a) contacting an outer periphery of the internal dielectric (5) and a non-contact section (7b) not contacting the outer periphery of the internal dielectric (5),
the plug (1) having a plug member (10) in which a through hole (20) into which the internal dielectric (5) is insertable is formed, and a tubular crimping member (50) at least partially surrounding the plug member (10),
the plug member (10) having a tubular connecting section (18) on a side on which the internal dielectric (5) is inserted,
the non-contact section (7b) of the external conductor (7) at least partially covering an outer periphery of the connecting section (18), with the internal dielectric (5) inserted into the through hole (20) of the plug member (10),
the crimping member (50) being fitted onto the connecting section (18) of the plug member (10) and the non-contact section (7b) of the external conductor (7), and
the waveguide (3) being connected to the plug (1), by crimping the crimping member (50) and bringing the crimping member (50) into close contact with the non-contact section (7b) and the connecting section (18).

2. The plug and waveguide connection structure according to claim 1, further comprising:
a tube (9) that shrinks with heat,
wherein the tube (9), when shrunk, is disposed in close contact from the crimping member (50) of the plug (1) to the contact section (7a) of the external conductor (7).

3. The plug and waveguide connection structure according to claim 1,
wherein the internal dielectric (5) has a distal end portion (5a) located inside the through hole (20) of the plug member (10) and tapered such that an area of a cross-section perpendicular to an extension direction of the through hole (20) decreases proceeding toward a distal end thereof.

4. The plug and waveguide connection structure according to claim 1,
wherein the connecting section (18) of the plug member (10) has a recessed portion (18a) formed in an outer peripheral surface thereof, and a portion of the non-contact section (7b) of the external conductor (7) opposing the connecting section (18) is deformed according to a shape of the outer peripheral surface including the recessed portion (18a) due to the crimping member (50) being crimped.

5. The plug and waveguide connection structure according to claim 1,
wherein the crimping member (50) is made of a metal, and a base of the metal is exposed on a surface of the crimping member (50) or the surface of the crimping member (50) is covered with a metal having a greater ionization tendency than platinum.

6. The plug and waveguide connection structure according to any one of claims 1 to 5,
wherein the plug (1) further includes a plug cover (30) that at least partially covers an outer periphery of the plug member (10) and is fitted onto the plug member (10) in such a manner as to be rotatable relative to the plug member (10), and
the plug cover (30) has a holding section (32) configured to irremovably hold a fitting partner to be fitted to the plug (1) by rotation.
